# EUROPÄISCHE PATENTSCHRIFT

(11) **EP 0 554 875 B1**
(45) Veröffentlichungstag und Bekanntmachung des Hinweises auf die Patenterteilung: **15.11.1995**
(21) Anmeldenummer: 93101752.9
(22) Anmeldetag: 04.02.1993
(51) Int. Cl.: F02B 27/04, F01N 3/28

(54) **Auspuffanlage für Zweitakt-Brennkraftmaschinen**
Exhaust system for two-cycle internal combustion engines
Système d'échappement pour moteurs à combustion interne à deux temps

(30) Priorität: 07.02.1992 DE 4203507
(43) Veröffentlichungstag der Anmeldung: 11.08.1993
(73) Patentinhaber: Fichtel & Sachs AG, D-97419 Schweinfurt (DE)
(72) Erfinder: Troch, Günter, W-8721 Schwebheim (DE)
(74) Vertreter: Prechtel, Jörg, Dipl.-Phys. Dr.

(56) Entgegenhaltungen:
- EP-A- 0 152 153
- EP-A- 0 389 466
- EP-A- 0 401 196
- DE-C- 964 005
- GB-A- 955 056
- US-A- 2 305 946
- US-A- 2 542 756

## Beschreibung

Die vorliegende Erfindung betrifft eine Auspuffanlage nach dem Oberbegriff des Anspruchs 1.

Eine Auspuffanlage dieser Art ist bekannt (DE-U-88 08 796). Der Katalysator ist hier innerhalb eines den Auspuffkrümmer mit dem Schalldämpfer verbindenden, sich zum Schalldämpfer hin konisch aufweitenden Rohrstücks angeordnet, und zwar auf einem zu diesem Rohrstück konzentrischen Rohrfortsatz, der den Katalysator in relativer Nähe zur Austrittsöffnung des Zylinders hält, damit der Katalysator von dem Abgasen des Zylinders rasch erwärmt und auf ausreichend hohen Temperaturen gehalten wird. Das den Katalysator aufnehmende, relativ lange Rohrstück, das von einer ringförmigen Prallwand als Teil des Schalldämpfers abgeschlossen wird, bildet ein relativ großes Aufnahmevolumen für die stoßweise vom Zylinder abgegebenen Abgase, was das "Atmen" des Zweitaktmotors, d.h. die Zylinderentleerung mit nachfolgender Füllung und damit die Motorleistung günstig beeinflußt. Jedoch ist diese Bauweise vor allem aufgrund der Rohr-in-Rohr-Anordnung ziemlich aufwendig. Auch ist der praktisch realisierbare Minimalabstand zwischen Zylinder und Katalysator noch relativ groß.

Bei einer ähnlichen Anordnung gemäß EP-A-0 401 196 soll der ungünstig große Abstand des Katalysators vom Zylinder durch ein vom Katalysator bis in den Auspuffkrümmer hineinreichendes Anströmrohr mit kleinem Durchmesser kompensiert werden, wodurch diese Anordnung noch herstellungsaufwendiger wird. Aus der US-A-4 206 177 schließlich ist eine Auspuffanlage mit einem heute nicht mehr gebräuchlichen ringförmigen, radial durchströmten Katalysator bekannt, der, ähnlich den beiden vorstehend beschriebenen bekannten Anordnungen, am zylinderseitigen Ende eines inneren Rohrfortsatzes angeordnet ist. Um ausreichend frühes "Anspringen" des Katalysators in der Warmlaufphase zu erreichen, wird hier ein zweites Katalysatorelement eingesetzt, welches am motorseitigen Ende des den ringförmigen Katalysator aufnehmenden Rohrstücks angebracht. Diese Anordnung ist von daher ebenfalls besonders aufwendig.

Betreffend die auf die Zylinderentleerung folgende Füllung des Zylinders mit Frischgasen haben Zweitakt-Brennkraftmaschinen generell den Nachteil, daß ein sogenannter "Nachauslaß" auftritt, d. h., daß nach dem Schließen des Überströmkanals und vor Schließen des Auslaßfensters Frischgase zum Auslaß hinausgedrängt werden, also in den Auspuff strömen. Der Füllungsgrad des Zylinders ist also nicht optimal, wodurch die Leistung der Brennkraftmaschine vermindert und der Kraftstoffverbrauch erhöht ist. Aus dem Stand der Technik, z. B. der DE-PS 964 005 bekannte Maßnahmen zur Erhöhung des Drucks der im Zylinder befindlichen Verbrennungsluft durch eine vom verengten Auspuffende zurücklaufende Druckwelle führen bei einer Auspuffanlage mit Katalysator aufgrund des relativ hohen Strömungswiderstands des Katalysators nicht zum Erfolg.

Aus der EP-A-0 152 153 ist es bekannt, eine Verbindungsrohr-Anordnung zwischen einem Schalldämpfer und einer Brennkraftmaschine mit Resonatoren zu versehen, um mittels Unterdruckwellen aus den Resonatoren das Absaugen der Abgase und das Ansaugen von Frischgas zu unterstützen. Die Resonatoren bestehen jeweils aus einer Kammer und einem von der Verbindungsrohr-Anordnung abzweigenden Leitung.

Auch aus der US 2,542,756 ist es bekannt, das Absaugen der Abgase und damit das Ansaugen von Frischgas durch Unterdruckwellen zu unterstützen, wobei gemäß einer in der US-Patentschrift gezeigten Ausführungsform hierfür ein gesondertes, vom Auspuff abzweigendes Rohr mit geschlossenem Ende vorgesehen sein kann.

Der Erfindung liegt das technische Problem zugrunde, eine Auspuffanlage der eingangs genannten Art bereitzustellen, welche bei einfachem Aufbau und möglichst hohen Füllungsgrad des Zylinders mit Frischgas für eine rasche Erwärmung des Katalysators in der Warmlaufphase des Motors sorgt.

Diese Aufgabe wird durch die Auspuffanlage mit den Merkmalen des Anspruchs 1 gelöst.

Die Verbindungsrohr-Anordnung, die im einfachsten Falle aus einem ersten Rohrabschnitt zwischen dem motorseitigen Anschlußende und dem Katalysator und einem zweiten Rohrabschnitt zwischen dem Katalysator und dem Schalldämpfer besteht, die aber beispielsweise bei Mehrzylinder-Brennkraftmaschinen zumindest im Abschnitt zwischen motorseitigem Anschlußende und Katalysator auch aus mehreren Rohren bestehen kann, braucht nicht mehr relativ große Volumina zur Erleichterung des "Atmens" des Motors bereitzustellen, da diese Funktion vom gesonderten Schwingrohr übernommen wird. Demzufolge kann der Katalysator in jeder gewünschten Position innerhalb der Verbindungsrohr-Anordnung, also auch recht nah am Zylinder angeordnet sein, d. h. an einer Stelle, an der die aus dem Zylinder abgegebenen Abgase noch wenig abgekühlt sind. Der Katalysator erreicht daher seine Betriebstemperatur sehr frühzeitig. Das gesonderte Schwingrohr kann seitlich an die Verbindungsrohr-Anordnung angesetzt werden, ohne komplizierte Rohr-in-Rohr-Montage, so daß einfache kostengünstige Herstellbarkeit gewährleistet ist.

Zum Erreichen eines möglichst hohen Füllgrads des Zylinders dient das Schwingrohr gleichzeitig als Reflexionsrohr. Auf diese Weise wird Frischgas, welches gegen Ende der Ausstoßphase durch das noch geöffnete Auslaßfenster in die Auspuffanlage gelangt, in den Zylinderraum zurückgeschoben. Hierdurch wird der Füllgrad des Zylinders deutlich verbessert.

Auch wird der Anteil unverbrauchter Kohlenwasserstoffe im Abgas verringert, was eine bessere Abgasqualität und einen geringeren Kraftstoffverbrauch zur Folge hat. Auch die Lebensdauer des Katalysators wird hierdurch vorteilhaft beeinflußt.

Eine besonders einfach aufgebaute Ausführungsform der Erfindung ist dadurch gekennzeichnet, daß das Schwingrohr an seinem abgeschlossenen Ende eine zur Rohrachse im wesentlichen senkrechte, als Prallwand für Druckwellen dienende Stirnwand aufweist. Die Prallwand ist in einer derartigen Position angeordnet, daß in einem bevorzugten Arbeits-Drehzahlbereich der Zweitakt-Brennkraftmaschine die reflektierte Überdruckwelle gerade dann am Zylinder ankommt, wenn der Überströmkanal bereits geschlossen, das Auslaßfenster jedoch noch offen ist.

In einer Weiterbildung der Erfindung ist vorgesehen, daß daß Schwingrohr mit einer Erweiterung ausgebildet ist, derart, daß eine von einer zu Beginn der Öffnung des Auslaßschlitzes erzeugten Überdruckwelle durch Reflexion an der Erweiterung ausgeübte Reflexions-Unterdruckwelle den Zylinder etwa zum Zeitpunkt des unteren Kolben-Totpunktes erreicht. Diese Unterdruckwelle erreicht also etwa in der zeitlichen Mitte der Abgasausstoßphase den Zylinder, wodurch das Ausstoßen der Abgase optimal unterstützt wird.

Bei einer möglichen stufenartigen Erweiterung liegt die Reflexionsebene in der Stufenebene. Die reflektierte Unterdruckwelle kommt also in einem recht schmalen Zeitintervall beim Zylinder an. Um dieses Zeitintervall zu vergrößern, damit die Abgaßausstoßphase in einem dementsprechend größeren Drehzahlbereich optimal unterstützt wird, wird vorgeschlagen, daß die Erweiterung von einem sich im wesentlichen konisch erweiternden Rohr-Abschnitt gebildet ist.

In entsprechender Weise kann man auch die vom Rohrende reflektierte Überdruckwelle strecken, um die Erhöhung der Zylinderfüllung über einen größeren Drehzahlbereich zu erreichen. Hierzu wird vorgeschlagen, daß das abgeschlossene Schwingrohrende von einem im wesentlichen zulaufenden Rohr-Abschnitt gebildet ist.

Besonders bevorzugt ist vorgesehen, daß das Schwingrohr der Reihe nach aus einem ersten, das offene Schwingrohrende bildenden Rohr-Abschnitt mit im wesentllichen konstantem Querschnitt, einen sich konisch erweiternden zweiten Abschnitt und einen konisch spitz zulaufenden, als Prallwand für Druckwellen dienenden dritten Abschnitt besteht, vorzugsweise mit einem vierten, zylindrischen Abschnitt zwischen dem zweiten und dritten Abschnitt.

Eine ebenfalls besonders bevorzugte Ausgestaltung der Erfindung ist dadurch gekennzeichnet, daß das Schwingrohr derart dimensioniert ist, daß eine von einer Schwingrohrschwingung im Bereich des offenen Schwingrohrendes ausgelöste Unterdruckwelle den Zylinder etwa zum Zeitpunkt des unteren Kolben-Totpunktes erreicht. Das Schwingrohr ist demzufolge als Resonanzkörper ausgebildet, wobei die Resonanz bzw. die Resonanzen derart liegen, daß nach Anregung der entsprechenden Resonanz, insbesondere durch die zu Beginn der Öffnung des Auslaßschlitzes des Zylinders von diesem abgegebene Überdruckwelle, die im Rohr hin- und herschwingende Luftsäule kurz vor der unteren Kolben-Totpunktstellung in der Verbindungsrohranordnung am offenen Schwingrohrende eine Unterdruckwelle auslöst, die den Zylinder etwa zum Zeitpunkt der unteren Kolbentotpunktstelle erreicht, d.h. etwa in der zeitlichen Mitte der Abgas-Ausstoßphase. Dies fördert die Entleerung des Zylinders.

Am Ende der Ausstoßphase, nach dem Schließen des bzw. der Überströmkanäle und vor dem Schließen des Auslaßfensters des Zylinders besteht im allgemeinen die Gefahr, daß Frischgase aus dem Auslaßfenster in die Auspuffanlage eintreten. Um diese Tendenz zumindest zu erschweren, wird vorgeschlagen, daß eine von einer Schwingrohrschwingung im Bereich des offenen Schwingrohrendes ausgelöste Überdruckwelle den Zylinder in einem Zeitraum nach dem Schließen des Überstromkanals und vor dem Schließen des Auslaßfensters des Zylinders erreicht. Die im fraglichen Zeitpunkt ankommende Überdruckwelle behindert das unerwünschte Austreten der Frischgase und fördert somit die Zylinderfüllung sowie die Abgasqualität.

In einer weiteren Ausführungsform der Erfindung ist vorgesehen, daß das Schwingrohr der Reihe nach aus einem das offene Schwingrohrende bildenden Rohrabschnitt mit im wesentlichen konstantem Querschnitt und einem Resonanz-Hohlkörper besteht. Hierbei kann der Resonanz-Hohlkörper beliebig, insbesondere im wesentlichen hohlkugelförmig ausgebildet sein. Es ergibt sich ein Helmholtz-Resonator mit ausgeprägter Grundschwingung der Luftsäule, die leicht anzuregen ist und die ausgeprägte Unterdruck- bzw. Überdruckwellen in der Verbindungsrohranordnung auslöst, die den Zylinder zu den angegebenen Zeitpunkten erreichen, um bestmögliche Zylinderfüllungen zu ermöglichen.

Je nach Auslegung des Motors werden im Drehmoment-Last-Kennfeld Bereiche durchfahren, in denen es günstiger ist, die Wirkung des Schwingrohrs einzuschränken oder gar auf das Schwingrohr zu verzichten. Es wird daher vorgeschlagen, daß das wenigstens eine Schwingrohr mit wenigstens einem in Abhängigkeit von Motor-Betriebszuständen betätigbaren Durchgangsabsperrventil versehen ist. Befindet sich das Absperrventil innerhalb des Schwingrohrs, so kann dessen effektive Länge variiert werden. Soll das Schwingrohr vollständig abschaltbar sein, so wird das Ventil im Bereich des offenen Schwingrohrendes angeordnet. Die Betätigung des Ventils kann automatisch erfolgen, insbesondere in Abhängigkeit von der Motordrehzahl. Das Ventil kann unterschiedliche Formen annehmen. Bevorzugt wird es von einer Drosselklappe oder von einer Kappe oder einer Absperrwalze oder von einem Sperrschieber gebildet.

Anstelle eines einteiligen Schwingrohrs mit Mündungsventil kann auch eine mehrteilige Anordnung vorgesehen sein, die dadurch gekennzeichnet ist, daß mehrere jeweils in den Strömungsweg zwischen dem motorseitigen Anschlußende und dem Katalysator einmündende Schwingrohre jeweils mit Durchgangsabsperrventilen vorgesehen sind. Drehzahlabhängig können also abwechselnd unterschiedlich lange Schwingrohre einzeln oder auch zusammengeschaltet zum Einsatz kommen.

Eine hierzu alternative Ausführungsform mit geringerem Aufwand an Material und Steuerungsmitteln ist dadurch gekennzeichnet, daß das Schwingrohr mit einer in Richtung der Rohrachse wahlweise verschiebbaren Prallwand versehen ist. Um eine automatische Verstellung zu ermöglichen, wird bevorzugt ein Stellmotor zur Verschiebung der Prallwand eingesetzt. Dieser wird vorzugsweise in Abhängigkeit von der Motordrehzahl durch eine entsprechende Steuerung betätigt, so daß das Reflexionsverhalten bzw. Resonanzverhalten des einen Schwingrohrs an die jeweilige Drehzahl anpaßbar ist.

Ferner wird vorgeschlagen, daß die Verbindungsrohranordnung einen ersten Rohrabschnitt zwischen dem motorseitigen Anschlußende und dem Katalysator umfaßt, der mit dem Schwingrohr eine erste Baueinheit bildet, daß die Verbindungsrohranordnung einen zweiten Rohrabschnitt zwischen dem Katalysator und dem schalldämpferseitigen Anschlußende umfaßt, der mit dem Schalldämpfer eine zweite Baueinheit bildet, und daß beide Baueinheiten zur Bildung der kompletten Auspuffanlage am Katalysator anbringbar sind. Vorteilhaft hierbei ist die leichte Austauschbarkeit des Katalysators aufgrund der beidseitigen Trennstellen zur ersten bzw. zweiten Baueinheit hin. Ferner läßt sich die Auspuffanlage durch Kombination unterschiedlich ausgelegter Schwingrohrausführungen (Kombination unterschiedlicher erster Baueinheiten) mit immer demselben Schalldämpfer (zweite Baueinheit) für unterschiedliche Motorvarianten abstimmen.

Die Erfindung wird nachstehend anhand der Zeichnung erläutert. Es zeigt:
- Fig. 1: eine Auspuffanlage mit zylindrischem Schwingrohr, Katalaysator und Schalldämpfer;
- Fig. 2: eine Auspuffanlage gemäß Fig. 1, jedoch mit konisch erweitertem Schwingrohr und konischer Prallwand;
- Fig. 3: eine Auspuffanlage gemäß Fig. 1, jedoch mit einem mit dem Schwingrohr verbundenen Hohlkörper;
- Fig. 4: ein Schwingrohr mit Ventil; und
- Fig. 5: ein Schwingrohr mit verstellbarer Prallwand.

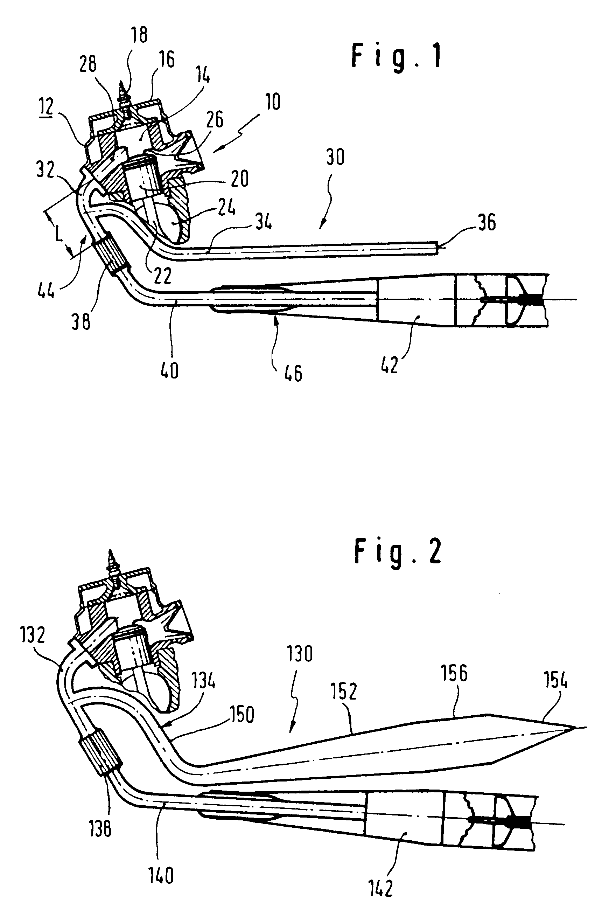

In Fig. 1 ist ein Zweitakt-Brennkraftmotor 10 vereinfacht im Schnitt dargestellt. Man erkennt einen Zylinder 12 mit Zylinderinnenraum 14 und Zylinderkopf 16 samt Zündkerze 18 sowie einen im Zylinder laufenden Kolben 20 samt Pleuelstange 22 und Kurbelwelle 24. Der Kolben 20 öffnet und schließt in üblicher Weise ein oder mehrere Einlaßfenster, Überstromkanäle und Auslaßfenster. In Fig. 1 ist ein Überstromkanal 26 angedeutet sowie ein Auslaßfenster 28.

Die erfindungsgemäße Auspuffanlage ist allgemein mit 30 bezeichnet. Sie umfaßt einen ersten Rohrabschnitt 32 mit einer Länge L, dessen motorseitiges Ende am Motor 10 zu befestigen ist und somit das motorseitige Anschlußende der Auspuffanlage 30 bildet. Ein Schwingrohr 34 mit einem durch eine Stirnwand 36 abgeschlossenen Ende ist mit seinem anderen offenen Ende am Rohrabschnitt 32, in dieses einmündend, angebracht, insbesondere angeschweißt. Auf den Rohrabschnitt 32 folgt ein axial von den Abgasen durchströmter Katalysator 38. An diesen schließt sich ein zweiter Rohrabschnitt 40 an, der den Katalysator 38 mit einem Schalldämpfer 42 üblichen Aufbaus verbindet. Der erste Rohrabschnitt 32 bildet zusammen mit dem Schwingrohr 34 eine erste Baueinheit 44; der Rohrabschnitt 40 bildet zusammen mit dem Schalldämpfer 42 eine zweite Baueinheit 46. Beide Baueinheiten sind zum Zusammenbau der Auspuffanlage 10 beidseits am Katalysator 38 montierbar. Dies erleichtert einen Katalysatoraustausch. Auch kann auf diese Weise ein und dieselbe zweite Baueinheit 46 mit ersten Baueinheiten 44 mit unterschiedlich ausgelegten Schwingrohrausführungen kombiniert werden zur Abstimmung an unterschiedliche Motorvarianten.

Das aus dem Auslaßfenster 28 in die Auspuffanlage 30 eintretende Abgas wird also über den ersten Rohrabschnitt 32 dem Katalysator 38 (insbesondere Oxydationskatalysator) zugeleitet und dann über den zweiten Rohrabschnitt 40 dem Schalldämpfer 42 zugeführt. Aus diesem tritt das Abgas ins Freie aus.

Die vom Brennkraftmotor 10 in der Frequenz der jeweiligen Drehzahl abgegebenen Gasstöße bringen in erster Linie die Masse der Gassäule in der ersten Baueinheit 44 zum Schwingen, da der Katalysator 38 aufgrund seines relativ hohen Strömungswiderstands einen Dämpfungseinfluß hat und ein Mitschwingen der Gassäule im zweiten Rohrabschnitt 40 weitgehend behindert. Ohne Schwingrohr 36 wäre die plötzliche Expansion der Abgase nach dem Verlassen des Zylinders stark behindert. Auch wäre die zur Erhöhung des Zylinder-Füllungsgrades erwünschte Gassäulenschwingung aufgrund der geringen Masse der Gassäule lediglich im ersten Rohrabschnitt 32 nicht ausgeprägt genug und läge zudem bei zu hoher Frequenz. Das Schwingrohr 34 bietet die gewünschte Expansionsmöglichkeit und Schwingungsmöglichkeit, so daß sich im Zylinder 12 zumindest in bestimmten Drehzahlbereichen Druckverhältnisse ergeben, die den Gaswechsel und somit die Zylinderfüllung begünstigen. Gleichzeitig sichert die Nähe des Katalysators 38 am Motor eine rasche Katalysatorerwärmung in der Warmlaufphase des Motors, so daß die gewünschte Katalysatorwirkung frühzeitig eintritt.

Das Schwingrohr 34 ist bei der Ausführungsform gemäß Fig. 1 mit der bereits erwähnten, bevorzugt senkrecht zur Rohrachse angeordneten Stirnwand 36 in Form eines in das Rohr eingeschweißten Deckels ausgebildet. Dieser dient als Prallwand zur Reflexion von Druckwellen, die vom Motor 10 abgegeben werden. Die Länge des Schwingrohrs 34 ist so festgelegt, daß die an der Prallwand als Überdruckwelle zurückreflektierte Welle den Zylinder nach dem Schließen des Überströmkanals 26 und vor dem Schließen des Auslaßfensters erreicht. Die Schwingung der Gasmasse innerhalb des Schwingrohrs 30, insbesondere in Form einer stehenden Welle mit einer zur Schwingrohrlänge umgekehrt proportionalen Grundfrequenz, kann zusätzlich zur Verbesserung des Füllungsgrads des Motors beitragen, indem die im Schwingrohr 30 hin- und herschwingende Gasmasse im Bereich des freien Schwingrohrendes Unterdruckwellen bzw. Überdruckwellen auslöst, die den Zylinder an geeigneten Zeitpunkten erreichen, nämlich, im Fall der Unterdruckwelle, etwa zum Zeitpunkt des unteren Kolbentotpunktes und im Falle der Überdruckwelle kurz vor dem Schließen des Auslaßfensters 28 durch den Kolben 20. Es wird ein ungewolltes Nachströmen von Frischgas aus dem Zylinderinnenraum 14 in die Auspuffanlage 30 zumindest stark erschwert. Dieser Resonanzeffekt kann durch entsprechende Formgebung des Schwingrohrs 34 im Hinblick auf die Resonanzfrequenz, Intensität und Frequenzbereichsbreite der möglichen Resonanzanregung variiert werden.

In Fig. 2 ist eine zweite, mit 130 bezeichnete Ausführungsform der Auspuffanlage dargestellt, bei der Bauteile, die ihrer Funktion nach solchen in Fig. 1 entsprechen, mit denselben Bezugsziffern, jeweils vermehrt um die Zahl 100, versehen sind. Die nachfolgende Beschreibung beschränkt sich auf die Unterschiede zur ersten Ausführungsform gemäß Fig. 1, so daß im übrigen auf die vorstehende Beschreibung der ersten Ausführungsform ausdrücklich Bezug genommen wird.

Unterschiedlich ist die Ausbildung des Schwingrohrs 134. Anstelle eines gebogenen Rohrs mit konstantem kreisringförmigem Querschnitt und radialer Stirnwand 36 besteht das Schwingungsrohr 134 nunmehr aus einem ersten, das offene Schwingrohrende bildenden Rohrabschnitt 150 mit im wesentlichen konstantem Kreisringquerschnitt, einem sich konisch erweiternden zweiten Abschnitt 152 und einem konisch spitz zulaufenden dritten Abschnitt 154, wobei im dargestellten Ausführungsbeispiel noch einer vierter hohlzylindrischer Abschnitt 156 zwischen dem zweiten Abschnitt 152 und dem dritten Abschnitt 154 eingesetzt ist. Dieser kann ggf. auch entfallen. Durch diese Ausbildung wird erreicht, daß die von dem als Prallwand dienenden, konisch zulaufenden Abschnitt 154 zurückgeworfene Reflexionswelle verbreitet ist und somit in einem größeren Drehzahlbereich nutzbar ist.

Der zweite, sich konisch erweiternde Abschnitt 152 führt ebenfalls zu einer Druckwellenreflexion. Im Falle einer stufenförmigen Erweiterung ergibt sich eine reflektierte Welle (= Reflexion am offenen Rohrende), bei der die reflektierte Welle angenähert gleiche Wellenlänge aufweist wie die einlaufende Welle. Aufgrund der Konizität des Abschnitts 152 wird die zurückgeworfene Reflexionswelle wiederum verbreitert und ist somit in einem größeren Drehzahlbereich nutzbar. Während bei der Reflexion am Abschnitt 154 (= Reflexion am geschlossenen Rohrende) die einlaufende Überdruckwelle eine reflektierte Überdruckwelle erzeugt, entsteht bei der Reflexion am offenen Ende aus der einlaufenden Überdruckwelle eine reflektierte Unterdruckwelle. Da der Abschnitt 152 näher am Zylinder liegt als der Abschnitt 154, kommt die reflektierte Unterdruckwelle auch eher an als die reflektierte Überdruckwelle. Die Laufzeit der Unterdruckwelle ist so durch die Dimensionen der Auspuffanlage festgelegt, daß im üblichen Drehzahlbereich die Unterdruckwelle gerade dann ankommt, wenn sich der Kolben im unteren Totpunkt befindet, also etwa im Bereich der zeitlichen Mitte der Abgas-Ausstoßphase. Die Unterdruckwelle unterstützt so den Austritt der Abgase in die Auspuffanlage.

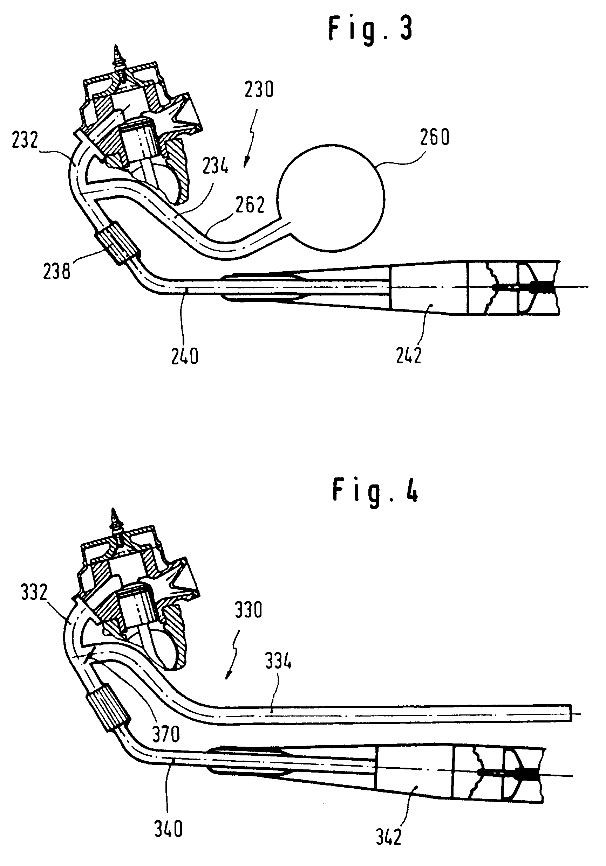

In Fig. 3 ist eine weitere mit 230 bezeichnete Ausführungsform dargestellt, wobei wiederum Bauteile, die ihrer Funktion nach solchen in Fig. 1 entsprechen, mit denselben Bezugsziffern, jeweils vermehrt um die Zahl 200, versehen sind. Auch hier beschränkt sich die Erläuterung auf die Unterschiede, ohne daß im übrigen auf die vorstehende Beschreibung ausdrücklich Bezug genommen wird.

Das Resonanzrohr 234 ist nunmehr als ausgeprägter Helmholtz-Resonator ausgebildet mit einem im wesentlichen beliebig geformten, insbesondere hohlkugelförmigen Resonanzhohlkörper 260, der über einen gebogenen Rohrabschnitt 262 mit konstantem Querschnitt verbunden ist, der wiederum in den ersten Rohrabschnitt 232 seitlich einmündet. Die Ausbildungsform zeichnet sich durch besonders ausgeprägtes Resonanzverhalten aus, so daß sowohl ausgeprägte Überdruckwellen als auch ausgeprägte Unterdruckwellen erzeugt werden, die zu den angegebenen Zeitpunkten den Zylinder erreichen, um die Füllung zu verbessern.

In Fig. 4 ist eine weitere mit 330 bezeichnete Ausführungsform der Auspuffanlage dargestellt, wobei wiederum Bauteile, die solchen in Fig. 1 entsprechen, mit denselben Bezugsziffern, jeweils vermehrt um die Zahl 300, versehen sind. Auch wird lediglich auf die Unterschiede eingegangen.

Die Ausbildung des Schwingrohrs 334 entspricht bis auf eine größere wirksame Länge sowie größeren Durchmesser der des Schwingrohrs 34 gemäß Fig. 1. Nunmehr ist jedoch ein Ventil 370 in Form einer Drosselklappe, wie dargestellt, oder auch in anderer Form vorgesehen, und zwar im Bereich der Einmündung des Schwingrohrs 334 in den ersten Rohrabschnitt 332. Das Ventil 370 ermöglicht es, das Schwingrohr 334 gegen den Gasstrom abzuschließen, da sich gezeigt hat, daß bei manchen Motoren in bestimmten Betriebszuständen, insbesondere bei momentan geringer Leistungsabgabe, der Motorbetrieb ohne Schwingrohr besser beherrschbar ist als mit Schwingrohr. Das Öffnen und Schließen des Ventils 370 kann selbsttätig, insbesondere drehzahlabhängig, von einer entsprechenden Ventilsteuerung aus erfolgen.

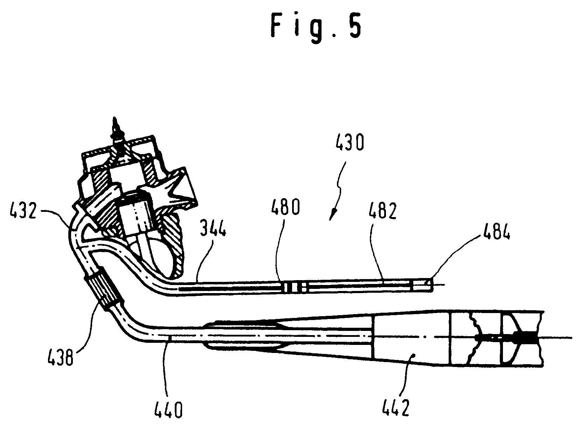

In Fig. 5 schließlich ist eine weitere mit 430 bezeichnete Ausführungsform der Auspuffanlage dargestellt, wobei Bauteile, die solchen in Fig. 1 entsprechen, mit denselben Bezugsziffern, jeweils vermehrt um die Zahl 400, versehen sind. Die nachfolgende Beschreibung beschränkt sich wiederum auf die Unterschiede.

Das Schwingrohr 434 ist genauso aufgebaut wie die Schwingrohre 34 und 334 gemäß Fig. 1 und 4 bis auf eine nunmehr vorgesehene ortsverschiebbare Prallwand 480 zur Änderung der effektiven Schwingrohrlänge und damit zur Drehzahlanpassung der Resonanzfrequenz bzw. der Laufzeit der reflektierten Unterdruckwelle. Die Prallwand 480 kann hierzu auf einer Spindel 482 längsverstellbar angeordnet sein. Die Spindel 482 kann durch einen Stellmotor 484 am geschlossenen Schwingrohrende in Drehung versetzt werden, die eine entsprechende Axialverschiebung der im Schwingrohr 434 längsverschiebbar, jedoch unverdrehbar gelagerten Prallwand 480 zur Folge hat. Damit kann der Tatsache Rechnung getragen werden, daß verschiedene Drehzahlen unterschiedliche effektive Schwingrohrlängen erfordern. Der Stellmotor 484 kann durch drehzahlabhängige Steuerimpulse die erforderlichen Steuerkommandos erhalten.

Die vorstehend beschriebenen Ausführungsformen zeichnen sich dadurch aus, daß der Abstand zwischen dem Oxydations-Katalysator und dem Auslaßfenster des Motors gering gehalten werden kann, um eine ausreichend schnelle Katalysatorerwärmung zu erreichen. Gleichzeitig ergibt sich ein optimales Schwingungsverhalten der sich an das Auslaßfenster anschließenden Abgassäule, die für den optimalen Betrieb, insbesondere für hohes Drehmoment, der Zweitaktbrennkraftmaschine wesentlich ist. Die erforderliche Schwingungslänge sowie das erforderliche Expansionsvolumen gewährleistet der Anschluß einer von einem Schwingrohr gebildeten Schwingeinrichtung im Nebenschluß an einen optimal kurzen Rohrabschnitt, der den Motor mit dem Katalysator verbindet. Erfindungsgemäß wird die Gasströmung also von der Gasschwingung getrennt. Durch unterschiedlich ausgebildete Schwingrohre läßt sich die Auspuffanlage an verschiedene Verbrennungsmotoren leicht anpassen.

## Patentansprüche

1. Auspuffanlage einer einen Auslaßschlitz mit einem Auslaßfenster (28) sowie einen Überströmkanal (26) aufweisenden Zweitakt-Brennkraftmaschine, umfassend:
- einen Schalldämpfer (42),
- eine Verbindungsrohr-Anordnung (32, 40) mit einem motorseitigen Anschlußende zum Anschluß an wenigstens einen Zylinder (12) der Brennkraftmaschine und einem schalldämpferseitigen Anschlußende, welches mit dem Schalldämpfer (42) verbunden ist, und
- einen Katalysator (38) innerhalb der Verbindungsrohr-Anordnung im Strömungsweg zwischen beiden Anschlußenden,
**gekennzeichnet durch**
wenigstens ein mit der Verbindungsrohranordnung verbundenes gesondertes Schwingrohr (34; 134; ... 434) mit einem abgeschlossenen Schwingrohrende und mit einem offenen Ende, welches in den Strömungsweg zwischen dem motorseitigen Anschlußende und dem Katalysator (38) einmündet, wobei das Schwingrohr (34; 134; ... 434) eine derartige Länge aufweist, daß eine von einer zu Beginn der Öffnung des Auslaßschlitzes erzeugten Überdruckwelle durch Reflexion am abgeschlossenen Schwingrohrende des Schwingrohrs ausgelöste Reflexions-Überdruckwelle den Zylinder (12) in einem Zeitraum nach dem Schließen des Überströmkanals (26) und vor dem Schließen des Auslaßfensters (28) des Zylinders (12) erreicht.

2. Auspuffanlage nach Anspruch 1,
dadurch gekennzeichnet, daß das Schwingrohr (34) an seinem abgeschlossenen Ende eine zur Rohrachse im wesentlichen senkrechte, als Prallwand für Druckwellen dienende Stirnwand (36) aufweist (Fig. 1).

3. Auspuffanlage nach Anspruch 1,
dadurch gekennzeichnet, daß das abgeschlossene Schwingrohrende von einem im wesentlichen konisch spitz zulaufenden Rohr-Abschnitt (154) gebildet ist.

4. Auspuffanlage nach Anspruch 3,
dadurch gekennzeichnet, daß das Schwingrohr (134) der Reihe nach aus einem ersten, das offene Schwingrohrende bildenden Rohrabschnitt (150) mit im wesentlichen konstantem Querschnitt, einen sich konisch erweiternden zweiten Abschnitt (152) und einen konisch spitz zulaufenden, als Prallwand für Druckwellen dienenden dritten Abschnitt (154) besteht, vorzugsweise mit einem vierten, zylindrischen Abschnitt (156) zwischen dem zweiten und dritten Abschnitt (152,154);(Fig.2).

5. Auspuffanlage nach Anspruch 1,
dadurch gekennzeichnet, daß das Schwingrohr der Reihe nach aus einem das offene Schwingrohrende bildenden Rohrabschnitt (262) mit im wesentlichen konstantem Querschnitt und einem Resonanz-Hohlkörper (260) besteht (Fig. 3).

6. Auspuffanlage nach Anspruch 5,
dadurch gekennzeichnet, daß der Resonanz-Hohlkörper (260) im wesentlichen hohlkugelförmig ist.

7. Auspuffanlage nach einem der vorhergehenden Ansprüche,
dadurch gekennzeichnet, daß das Schwingrohr (134) mit einer Erweiterung (Abschnitt 152) ausgebildet ist, derart, daß eine von einer zu Beginn der Öffnung des Auslaßschlitzes erzeugten Überdruckwelle durch Reflexion an der Erweiterung (Abschnitt 152) ausgelöste Reflexions-Unterdruckwelle den Zylinder etwa zum Zeitpunkt des unteren Kolben-Totpunktes erreicht.

8. Auspuffanlage nach Anspruch 7,
dadurch gekennzeichnet, daß die Erweiterung von einem sich im wesentlichen konisch erweiternden Rohr-Abschnitt (152) gebildet ist.

9. Auspuffanlage nach einem der vorhergehenden Ansprüche,
dadurch gekennzeichnet, daß das Schwingrohr (34;134; ... 434) derart dimensioniert ist, daß eine von einer Schwingrohrschwingung im Schwingrohr (34;134 ... 434) im Bereich des offenen Schwingrohrendes ausgelöste Unterdruckwelle den Zylinder (12) etwa zum Zeitpunkt des unteren Kolben-Totpunktes erreicht.

10. Auspuffanlage nach einem der vorhergehenden Ansprüche,
dadurch gekennzeichnet, daß das Schwingrohr (34;134; ... 434) derart dimensioniert ist, daß eine von einer Schwingrohrschwingung im Schwingrohr (34;134 ... 434) im Bereich des offenen Schwingrohrendes ausgelöste Überdruckwelle den Zylinder (12) in einem Zeitraum nach dem Schließen des Überströmkanals (26) und vor dem Schließen des Auslaßfensters (28) des Zylinders (12) erreicht.

11. Auspuffanlage nach einem der vorhergehenden Ansprüche,
dadurch gekennzeichnet, daß das wenigstens eine Schwingrohr (334) mit wenigstens einem in Abhängigkeit von Motor-Betriebszuständen betätigbaren Durchgangsabsperrventil (370) versehen ist (Fig. 4).

12. Auspuffanlage nach Anspruch 11,
dadurch gekennzeichnet, daß das Absperrventil (370) von einer Drosselklappe oder einer Kappe oder einer Absperrwalze oder einem Sperrschieber gebildet ist.

13. Auspuffanlage nach Anspruch 12,
dadurch gekennzeichnet, daß das Durchgangsabsperrventil (370) im Bereich des offenen Schwingrohrendes angeordnet ist.

14. Auspuffanlage nach einem der Ansprüche 11 bis 13,
dadurch gekennzeichnet, daß mehrere jeweils in den Strömungsweg zwischen dem motorseitigen Anschlußende und dem Katalysator einmündende Schwingrohre jeweils mit Durchgangsabsperrventilen vorgesehen sind.

15. Auspuffanlage nach einem der vorhergehenden Ansprüche,
dadurch gekennzeichnet, daß das Schwingrohr (434) mit einer in Richtung der Rohrachse wahlweise verschiebbaren Prallwand (480) versehen ist (Fig. 5).

16. Auspuffanlage nach Anspruch 15,
gekennzeichnet durch einen Stellmotor (484) zur Verschiebung der Prallwand (480), vorzugsweise in Abhängigkeit von der Motordrehzahl.

17. Auspuffanlage nach einem der vorhergehenden Ansprüche,
dadurch gekennzeichnet, daß die Verbindungsrohranordnung einen ersten Rohrabschnitt (32) zwischen dem motorseitigen Anschlußende und dem Katalysator (38) umfaßt, der mit dem Schwingrohr (34) eine erste Baueinheit (44) bildet, daß die Verbindungsrohranordnung einen zweiten Rohrabschnitt (40) zwischen dem Katalysator (38) und dem schalldämpferseitigen Anschlußende umfaßt, der mit dem Schalldämpfer (42) eine zweite Baueinheit (46) bildet, und daß beide Baueinheiten (44,46) zur Bildung der kompletten Auspuffanlage (30) am Katalysator (38) anbringbar sind.

## Claims

1. Exhaust system of a two-stroke internal combustion engine having an outlet gap with an exhaust opening (28) and an overflow channel (26) comprising:
- a silencer (42),
- a connecting pipe-system (32, 40) with a motor-side connection end for connecting with at least one cylinder (12) of the internal combustion engine and a silencer-side connection end which is connected to the silencer (42), and
- a catalytic converter (38) inside the connection pipe-system in the flow path between both connection ends,
**characterised in that**
at least one separate swing pipe (34; 134; ... 434) connected to the connection pipe-system with a sealed end and an open end, which open end enters the flow path between the motor-side connection end and the catalytic converter (38), whereby the swing pipe (34; 134; ... 434) is so long that reflection-excess pressure wave caused by an excess pressure wave produced at the beginning of the opening of the outlet gap by reflection at the sealed swing pipe end reaches the cylinder (12) in the time after the overflow channel (26) is closed and the outlet window (28) of the cylinder (12) is closed.

2. Exhaust system according to claim 1, characterised in that the swing pipe (34) has an end wall (36) at its sealed end which is perpendicular to the pipe axis serving as a pressure wave impact wall (fig. 1).

3. Exhaust system according to claim 1, characterised in that the sealed swing pipe end is formed by a conically pointed pipe section (154).

4. Exhaust system according to claim 3, characterised in that the swing pipe (134) comprises in order: a first pipe section (150) forming the open swing pipe end of uniform cross-section, a conically extending second section (152) and a conically pointed third section (154) acting as the impact wall for pressure waves, preferably with a fourth, cylindrical section (156) between the second and third section (152, 154); (fig. 2).

5. Exhaust system according to claim 1, characterised in that the swing pipe comprises in order a pipe section (262) forming the open swing pipe end of uniform cross-section and a resonant-cavity (260) (fig. 3).

6. Exhaust system according to claim 5, characterised in that the resonant-cavity (260) is essentially spherical and hollow in design.

7. Exhaust system according to one of the preceding claims, characterised in that the swing pipe (134) is constructed with an extension (section 152), such that a reflection-underpressure wave caused by an excess-pressure wave produced at the beginning of the opening of the outlet gap by reflection at the extension (section 152) reaches the cylinder approximately at the point of the lower piston dead centre.

8. Exhaust system according to claim 7, characterised in that the extension is formed by a conically extending pipe section (152).

9. Exhaust system according to one of the preceding claims, characterised in that the swing pipe (34; 134; ... 434) is proportioned so that an underpressure wave produced by a swing pipe movement in the swing pipe (34; 134 ... 434) in the region of the open swing pipe end reaches the cylinder (12) approximately at the point of the lower piston dead centre.

10. Exhaust system according to one of the preceding claims, characterised in that the swing pipe (34; 134; ... 434) is proportioned so that an underpressure wave created by a swing pipe movement in the swing pipe (34; 134 ... 434) in the region of the open swing pipe end reaches the cylinder (12) after the overflow channel (26) is closed and before the outlet window (28) of the cylinder (12) is closed.

11. Exhaust system according to one of the preceding claims, characterised in that at least one swing pipe (334) is provided with at least one straight-way stop valve (370) which can be activated depending on motor-operating conditions (fig. 4).

12. Exhaust system according to claim 11, characterised in that the straight-way stop valve (370) is formed by a choke control, cap, stop cylinder or stop slide.

13. Exhaust system according to claim 12, characterised in that the straight-way stop valve (370) is disposed in the region of the open swing pipe end.

14. Exhaust system according to one of claims 11 to 13, characterised in that several swing pipes entering the flow path between the motor-side connection end and the swing pipes entering the catalytic converter are each provided with straght-way stop valves.

15. Exhaust system according to one of the preceding claims, characterised in that the swing pipe (434) is provided with a impact wall (480) alternatively slidable in the direction of the pipe axis (fig. 5).

16. Exhaust system according to claim 15, characterised by a control-motor (484) for sliding the impact wall (480), preferably depending on motor speed.

17. Exhaust system according to one of the preceding claims, characterised in that the connecting pipe system comprises a first pipe section (32) between the motor-side connection end and the catalytic converter (38) which forms a first construction unit (44) with the swing pipe (34), the connecting pipe system comprises a second pipe section (40) between the catalytic converter (38) and the silencer-side connection end, forming a second construction unit (46) with the silencer (42) and both construction units (44, 46) can be attached to the catalytic converter (38) to form the complete exhaust system (30).

## Revendications

1. Pot d'échappement d'un moteur à combustion interne à deux temps pourvu d'une fente d'échappement avec une ouverture (28) d'échappement ainsi que d'un canal de trop plein (26), comprenant :
- un silencieux (42)
- un dispositif (32, 40) de tubulures de liaison, comportant une extrémité de raccordement côté moteur pour le raccordement à au moins un cylindre (12) du moteur à combustion interne et une extrémité de raccordement côté silencieux, qui est reliée au silencieux (42), et
- un catalyseur (38) à l'intérieur du dispositif de tubulures de liaison, placé dans la trajectoire d'écoulement entre les deux extrémités de raccordement,
caractérisé par au moins une tubulure oscillante (34; 134 ; ... 434) distincte, reliée au dispositif de tubulures de liaison, comportant une extrémité fermée de tubulure oscillante et une extrémité ouverte qui débouche dans la trajectoire d'écoulement, entre l'extrémité de raccordement côté moteur et le catalyseur (38), la tubulure oscillante (34 ; 134 ... 434) étant d'une longueur telle qu'une onde de surpression de réflexion créée, par réflexion sur l'extrémité fermée de la tubulure oscillante, par une onde de surpression générée au début de l'ouverture de la fente d'échappement, atteint le cylindre dans un laps de temps situé après la fermeture du canal de trop plein (26) et avant la fermeture de l'ouverture d'échappement (28) du cylindre (12).

2. Pot d'échappement selon la revendication 1,
caractérisé en ce que la tubulure oscillante (34) présente à son extrémité fermée une paroi frontale (36) servant de paroi d'impact pour ondes de pression, et sensiblement perpendiculaire par rapport à l'axe de tubulure (figure 1).

3. Pot d'échappement selon la revendication 1,
caractérisé en ce que l'extrémité fermée de la tubulure oscillante est constituée par une section de tubulure (154) se rétrécissant sensiblement de manière conique.

4. Pot d'échappement selon la revendication 3,
caractérisé en ce que la tubulure oscillante (34) est constituée, dans l'ordre, d'une première section de tubulure (150) de section transversale sensiblement constante constituant l'extrémité ouverte de la tubulure oscillante, d'une deuxième section (152) s'évasant de manière conique et d'une troisième section (154) se rétrécissant en pointe de manière conique et servant de paroi d'impact pour des ondes de pression, de préférence avec une quatrième section (156) cylindrique, entre la deuxième et la troisième sections (152, 154) ; (figure 2).

5. Pot d'échappement selon la revendication 1,
caractérisé en ce que la tubulure oscillante est constituée, dans l'ordre, d'une section de tubulure (262) de section transversale sensiblement constante formant l'extrémité ouverte de la tubulure oscillante et d'un corps de résonance (260) creux (figure 3).

6. Pot d'échappement selon la revendication 5,
caractérisé en ce que le corps de résonance (260) creux est sensiblement de forme sphèrique creuse.

7. Pot d'échappement selon l'une quelconque des revendications précédentes,
caractérisé en ce que la tubulure oscillante (134) est conçue avec une extension (section 152) de manière telle qu'une onde de dépression de réflexion exercée par réflexion sur l'extension par une onde de surpression générée au début de l'ouverture de la fente d'échappement, atteint le cylindre sensiblement au point mort bas du piston.

8. Pot d'échappement selon la revendication 1,
caractérisé en ce que l'extension est formée par une section de tubulure (152) s'évasant de manière conique.

9. Pot d'échappement selon l'une quelconque des revendications précédentes,
caractérisé en ce que la tubulure oscillante (34 ; 134; ... 434) est dimensionnée de manière telle qu'une onde de dépression déclenchée par une vibration de la tubulure oscillante (34 ; 134 ... 434) dans le secteur de l'extrémité ouverte de la tubulure oscillante, atteint le cylindre (12) environ au moment du point mort bas du piston.

10. Pot d'échappement selon l'une quelconque des revendications précédentes,
caractérisé en ce que la tubulure oscillante (34 ; 134; .... 434) est dimensionnée de manière telle qu'une onde de surpression déclenchée par une oscillation de la tubulure oscillante (34 ; 134 ... 434) dans le secteur de l'extrémité ouverte de la tubulure oscillante atteint le cylindre (12) dans une plage de temps située après la fermeture du canal de trop plein (26) et avant la fermeture de l'ouverture d'échappement (28) du cylindre (12).

11. Pot d'échappement selon l'une quelconque des revendications précédentes,
caractérisé en ce que la tubulure oscillante (34), au nombre d'au moins un, est pourvue d'au moins une vanne d'arrêt (370) de passage pouvant être actionnée en fonction d'états de fonctionnement du moteur (figure 4).

12. Pot d'échappement selon la revendication 11,
caractérisé en ce que la vanne d'arrêt (370) est constituée par une vanne papillon ou par un cache ou un cylindre d'arrêt ou par un registre d'arrêt.

13. Pot d'échappement selon la revendication 12,
caractérisé en ce que la vanne d'arrêt (370) est placée dans la zone de l'extrémité ouverte de la tubulure oscillante.

14. Pot d'échappement selon l'une quelconque des revendications 11 à 13,
caractérisé en ce que plusieurs tubulures oscillantes, débouchant chacune dans la trajectoire d'écoulement, entre l'extrémité de raccordement côté moteur et le catalyseur, sont prévues chacune avec des vannes d'arrêt à passage.

15. Pot d'échappement selon l'une quelconque des revendications précédentes,
caractérisé en ce que la tubulure oscillante (434) est pourvue d'une paroi d'impact (480) mobile au choix en translation dans le sens de l'axe de la tubulure (figure 5).

16. Pot d'échappement selon la revendication 15,
caractérisé par un moteur de réglage (484) pour déplacer en translation la paroi d'impact (480), de préférence en fonction du régime du moteur.

17. Pot d'échappement selon l'une quelconque des revendications précédentes,
caractérisé en ce que le dispositif de tubulures de liaison comprend une première section de tubulure (32) entre l'extrémité de raccordement côté moteur et le catalyseur (38), qui constitue un premier module (44) avec la tubulure oscillante (34), en ce que le dispositif de tubulures de liaison comprend une deuxième section de tubulure (40) entre le catalyseur (38) et l'extrémité de raccordement côté silencieux, qui constitue un deuxième module (46) avec le silencieux (42), et en ce que, pour former le pot d'échappement (30) complet, les deux modules (44, 46) peuvent être montés sur le catalyseur (38).
